# EUROPEAN PATENT APPLICATION

(11) **EP 3 706 476 A1**
(43) Date of publication of application: **09.09.2020**
(21) Application number: 19161268.8
(22) Date of filing: 07.03.2019
(51) Int. Cl.: H04W 52/02

(54) **BATTERY POWERED DEVICE FOR COMMUNICATING WITH AN ACCESS POINT DEVICE OF A COMMUNICATION NETWORK**

(71) Applicant: Danfoss A/S, 6430 Nordborg (DK)
(72) Inventor: Steffensen, Martin Munkebo, 6430 Nordborg (DK); Nielsen, Nicolai Birkemose, 6430 Nordborg (DK)
(74) Representative: Patentanwälte Olbricht Buchhold Keulertz

(57) **Abstract**

The invention relates to a battery powered device for communicating with an access point device (34) of a communication network (36), the device (10) comprising: a communication unit (12) for communicating with the access point device (34); a processing unit (14) for controlling the communication unit (12); wherein the communication unit (12) comprises an active mode and a low power mode; wherein the communication unit (12) is further configured to provide a lost registration signal (46) indicating that the communication unit (12) is not registered at the access point device (34); wherein the processing unit (14) is configured to receive the lost registration signal (46); wherein, upon reception of the lost registration signal (46), the processing unit (14) is further configured to provide a release signal (48) to the communication unit (12), wherein the release signal (48) forces the communication unit (12) to stop communication or to detach from the access point device (34); wherein, upon reception of the lost registration signal (46), the processing unit (14) is further configured to provide a low power mode signal (50), wherein the low power signal transfers the communication unit (12) into the low power mode, wherein the processing unit (14) is further configured to provide an attach signal to the communication unit (12) after a predefined waiting period (54), wherein the attach signal transfers the communication unit (12) to the active mode and which orders the communication unit (12) to get a registration or to establish a connection to the access point device (34). The access point device (34) will therefore grant the communication unit (12) a higher priority for establishing a connection than if the communication unit (12) was not registered or detached for just a short period. Thus, after the waiting period the communication unit (12) will likely require a smaller number of connection attempts than without the waiting period. Since each connection attempt consumes a certain amount of battery power, the communication unit (12) will consume less battery power than without the waiting period. Over the lifetime of the device (10), this will significantly increase the lifetime of the battery and the device (10).

## Description

The invention relates to a battery powered device for communicating with an access point device of a communication network, an utility device for connecting to the access point of the network, a module board for connecting to a main board of a utility device, a method for establishing a connection between a device for communicating with an access point device of a communication network and an access point device of a communication network.

The communication between devices, which do not comprise a standard internet connection, is useful for interacting with those devices and for data exchange purposes. The internet of things extends the internet connectivity to those devices if they comprise any connectivity, which allows those devices to connect, interact and exchange data. Particularly, the narrowband internet of things (NB-loT) technology can be used in areas beyond the radio coverage of current cellular standards and in devices, which must run from battery power for many years.

The user device comprises a customer application which performs the network registration using e.g. AT command parsers. The so called +CEREG command may then be used for network registration status of a user device. The registration may be performed manually or automatically. The automatic registration may be defined as standard to try to connect the device to the network automatically.

The devices will generally send small amounts of data infrequently. A usage scenario might be 100 to 200 bytes sent twice per day for battery-powered devices. If the connection between the battery-powered device and the network is lost, the battery-powered device tries to reconnect to the network until the connection between the battery-powered device and the network is re-established.

An object of the invention may be to provide a device having an improved battery power consumption.

Claims 1, 9, and 11 to 14 indicate the main features of the invention. Features of embodiments of the invention are subject of claims 2 to 8 and 10.

An aspect of the invention provides a device for communicating with an access point device of a communication network. The device comprises a communication unit for communicating with the access point device; and a processing unit for controlling the communication unit; wherein the communication unit comprises an active mode and a low power mode; wherein the communication unit is further configured to provide a lost registration signal indicating that the communication unit is not registered at the access point device; wherein the processing unit is configured to receive the lost registration signal; wherein, upon reception of the lost registration signal, the processing unit is further configured to provide a release signal to the communication unit, wherein the release signal forces the communication unit to clear at least the registration, in particular to release registration and connection, from the access point device; wherein, upon reception of the lost registration signal, the processing unit is further configured to provide a low power mode signal, wherein the low power signal transfers the communication unit into the low power mode, wherein the processing unit is further configured to provide an attach signal to the communication unit after a predefined waiting period, wherein the attach signal transfers the communication unit to the active mode and which orders the communication unit to start communication with the access point device.

The invention provides a device, which controls the connection attempts for establishing a connection to the communication network. The connection attempt may comprise the request of the communication unit for a registration by the access point device. The connection between the communication unit and the access point device may be a wireless connection. If the communication unit loses the registration but still being connected or the connection including the registration to the access point device is lost, the processing unit orders the communication unit to stop the communication with the access point device, i.e. to stop any further attempts for establishing a communication with the access point device. Furthermore, the processing unit orders the communication unit to enter the low power mode. The power consumption of the communication unit is less in the low power mode than in the active mode. After stopping the communication with the communication network, the processing unit waits a predetermined period, i.e. the waiting period. After that waiting period, the processing unit orders to the communication unit to enter the active mode. Furthermore, the processing unit orders the communication unit to try to get a registration and/or to establish a connection to the access point device. Hence, instead of continuously trying to get a registration or to establish a connection with the access point device after a loss of the connection, the device ceases the attempts and waits a predetermined waiting period before trying to get a registration and/or to establish a connection to the communication network, again. Due to the predetermined waiting period, the communication unit stops communication with the communication network for a period, which may cause the access point device to categorize the communication unit as new device. The access point device will therefore grant the communication unit a higher priority for receiving a registration and/or for establishing a connection than if the communication unit was detached from the communication network for just a short period. Thus, after the waiting time the communication unit will require a smaller number of registration/connection attempts than without the waiting time. Since each attempt consumes a certain amount of battery power, the communication unit will consume less battery power than without the waiting time. Over the lifetime of the device, this will significantly increase the lifetime of the battery.

In an example, the access point device is a cell tower of communication network like a NB-IoT-network. The communication unit may then be able to connect to the network.

Furthermore, the communication unit may be an Internet of Things that is connected to the network. The communication unit may further be a narrowband communication unit, which may connect to the Internet of Things.

The predefined waiting period may be 60 min., preferably 12 h, further preferably 24 h. After that predefined waiting period, the access point device will categorize the communication unit as a new device. The access point device usually provide new devices a higher priority for registration and establishing a connection than known devices. This will further reduce the number of attempts of the communication unit for successfully establishing a connection and registration with the access point device.

In an example, after a predefined timeout period, the processing unit is further configured to check whether the communication unit established a registration and connection to the access point device after receiving the attach signal, and, if a check result indicates that the communication unit is not registered or connected to the access point device, to provide the release signal and the low power mode signal to the communication unit.

Thus, after the predefined waiting period, the processing unit provides the communication unit a predefined timeout period for receiving a registration and/or establishing a connection with the access point device. If the communication unit is unable to get a registration or to establish a connection to the access point device within the timeout period, the processing unit will order the communication unit to cease any further connection attempts until instructed otherwise, i.e. to release from the access point device. Furthermore, the processing unit sends the communication unit to the low power mode to save battery power. After the predefined waiting period, the processing unit may provide the attach signal, again. This avoids a high number of unsuccessful connection attempts after the waiting period if for example the access point device is unavailable. This further reduces the number of registration/connection attempts of the communication unit. Hence, the consumption of battery power may be reduced.

In an example, the processing unit is further configured to increase the predefined waiting period based on a number of how many consecutive check results indicate that the communication unit is not registered or connected to the access point device.

The waiting period for starting a new registration or connection attempt becomes longer depending on the number of attempts that were cancelled due to exceeding the timeout period. If many consecutive registration/connection attempts fail, the communication unit carries out further attempts after a longer waiting period. The longer waiting period will improve the priority of the device at the access point device for getting a registration and/or establishing a connection. This will reduce the number of attempts for establishing a working communication connection between the communication unit and the access point device. Furthermore, this will further reduce the consumption of battery power such that the battery lifetime is further increased.

In an example, the predefined waiting period is based on a power consumption of the device.

The waiting period may therefore be adapted to the power consumption of the device. If the remaining battery power is high, the waiting period may be short and the communication unit may carry out several registration/connection attempts. If the remaining battery power is low, the waiting period may be long. Thus, the processing unit controls the communication unit such to perform just a few attempts. In particular, in case of a low remaining battery power, power may be saved. This increases the battery lifetime, further.

In an example, the predefined waiting period is based on a detachment period of the communication unit from the access point device.

The detachment period, i.e. the period in which the communication unit stops any communication with the access point or is detached from the access point device is increased by the waiting period. The processing unit may increase the waiting period if the detachment period is short. Thus, using the increase of the waiting period, the processing unit may ensure that the communication unit stops any communication or is detached from the access point device for a minimum period. The minimum period may ensure that the access point device grants the communication unit a high priority for getting a registration or for establishing a connection after the attach signal. This will further increase the battery lifetime due to reduced power consumption.

In an example, the predefined waiting period increases if the power consumption of the device increases.

The increase of the predefined waiting period avoids that the registration/connection attempts of the communication unit will drain battery power when the power consumption of the device is increasing. This may ensure that enough battery power remains for the power consumption of the device, which will increase the lifetime of the battery, further.

In an example, the communication unit comprises or is combined with a subscriber identity module (SIM). The subscriber identity module may be designed as a SIM card or as an embedded subscriber identity module (eSIM) or any other suitable form.

A SIM may connect to a cell tower of a communication network. The device may therefore use an already existing wireless network structure to connect to the Internet of Things. This simplifies the use of the device and avoids establishing a new communication network.

In an example, the processing unit is a micro processing unit.

The micro processing unit may be an element of a user equipment, which shall connect to the communication network, e.g. the Internet of Things, for example for remote control or for exchanging data. The user equipment may for example be a flow sensor or another sensor or control device.

In a further aspect of the invention, an utility device for connecting to the access point of the network is provided. The utility device comprises: a device according to the above description; and an antenna for communicating with an access point of a network; wherein the communication unit is connected to the antenna; and wherein the communication unit is configured to provide and receive communication signals via the antenna.

The utility device may e.g. be a user equipment. The exemplary embodiments and advantages of the utility device are analogous to the exemplary embodiments and advantages of the device for communicating with an access point device of a communication network described above. Thus, concerning the exemplary embodiments and advantages it is referred to the above description of the device for communicating with an access point device of a communication network.

In an example, the utility device further comprises a main board comprising a main board communication interface and a main processing unit; and a module board comprising a module board communication interface being connected to the main board communication interface; wherein the device and the antenna are arranged on the module board; wherein the processing unit is connected to the module board communication interface; wherein the processing unit is configured to provide and receive control signals via the module board communication interface; wherein the main processing unit is connected to the main board communication interface, and wherein the main processing unit is configured to provide and receive control signals via the main board communication interface.

In a further aspect of the invention, a module board for connecting to a main board of a utility device is provided. The module board comprises: a device according to the above description; a module board communication interface for communicating with the main board of the utility device; and an antenna for communicating with an access point of a network; wherein the processing unit is connected to the module board communication interface; wherein the processing unit is configured to provide and receive control signals via the module board communication interface; wherein the communication unit is connected to the antenna; and wherein the communication unit is configured to provide and receive communication signals via the antenna.

The utility device may therefore be retrofitted with the device by connecting the module board comprising the device for communicating with an access point device of a communication network to the utility device. This allows retrofitting already existing utility devices if the main board of the utility device comprises a main board communication interface. Furthermore, this simplifies the upgrade or change of the used communication network or access point device since this requires just a replacement of the module board with the respective hardware.

In an example, the utility device is battery-driven. Thus, the utility device may be independent from the mains power.

In a further example, the utility device may be an ultrasonic flow meter or a sensor measurement device. Furthermore, the utility device may be a control device for controlling further devices.

The module board may for example comprise a power source, which may e.g. be a battery, which provides energy to the communication unit and the processing unit. The module board may therefore be independent from the power source of the utility device to which the module board is connected.

In a further aspect of the invention, a method for establishing a connection between a battery powered device according to the above description and an access point device of a communication network is provided. The method comprises the following steps: providing a lost registration signal using the communication unit, the lost registration signal indicating that the communication unit is not registered at and/or not connected to the access point device; receiving the lost registration signal using the processing unit; providing, upon reception of the lost registration signal, a release signal to the communication unit using the processing unit, wherein the release signal forces the communication unit to stop the communication with the access point device; providing, upon reception of the lost registration signal, a low power mode signal using the processing unit, wherein the low power mode signal transfers the communication unit into the low power mode; providing an attach signal to the communication unit after a predefined waiting period using the processing unit, wherein the attach signal transfers the communication unit to the active mode and which orders the communication unit to get a registration and/or to establish a connection to the access point device.

The exemplary embodiments and advantages of the method are analogous to the exemplary embodiments and advantages of the device for communicating with an access point device of a communication network described above. Thus, concerning the exemplary embodiments and advantages it is referred to the above description of the device for communicating with an access point device of a communication network.

In a further aspect of the invention, a computer program product is provided. The computer program product comprises instructions which when executed on a computer instruct the computer to perform the method steps of the method according to the above description.

Furthermore, a computer readable medium having stored the computer program product of the above description is provided.

Further features, details and advantages of the invention result from the wording of the claims as well as from the following description of exemplary embodiments based on the drawings. The figures show:
- Fig. 1: a schematic drawing of the topology of the network infrastructure;
- Fig. 2: a schematic drawing of the device;
- Fig. 3: a schematic drawing of an exemplary embodiment of the communication unit;
- Fig. 4a, b: schematic diagrams of a flow diagram for the signals;
- Fig. 5: a schematic drawing of an exemplary embodiment of a utility device;
- Fig. 6a, b: schematic drawings of exemplary embodiments of boards with the device; and
- Fig. 7: a schematic flow diagram of the method.

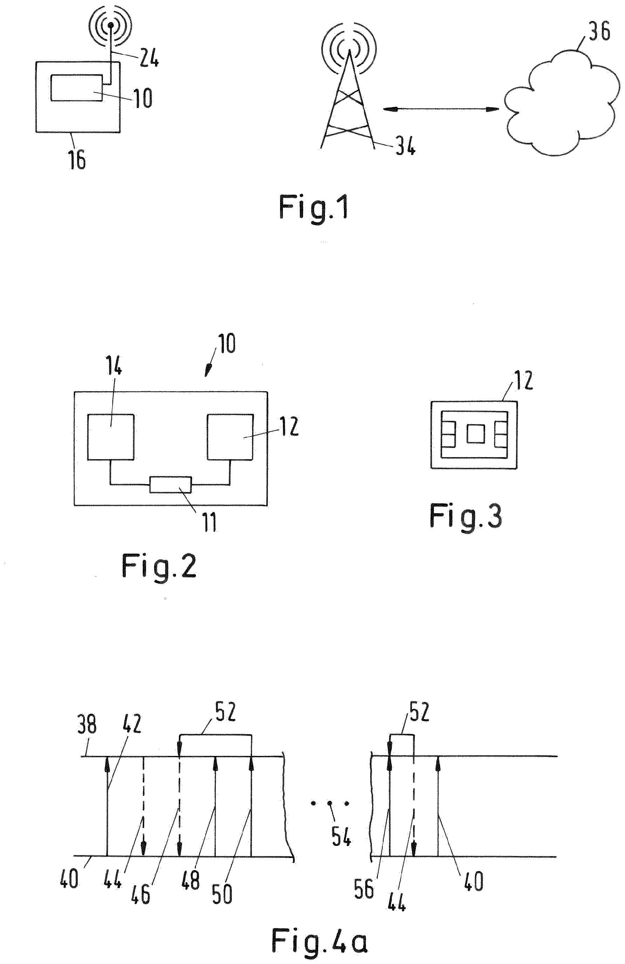

As shown in figure 1, the device 10 for communicating with an access point device of a communication network may be connected to a utility device 16. The communication unit (not shown) of the device 10 may be connected to an antenna 24 for wireless communication. The communication network 36 may be a communication network, which uses cell towers as access point devices 34. Before the communication unit 12 may communicate with the communication network 36, the access point device 34 has to establish a connection and to register the communication unit 12.

Figure 2 shows the device 10 for communicating with an access point device of a communication network. The device 10 comprises a power source 11, a communication unit 12 and a processing unit 14. The power source 11 is a battery.

The communication unit 10 is configured to establish and maintain a connection with the access point device 34 of the communication network 36 shown in figure 1. Establishing a connection includes the step of getting a registration that is needed to start a communication. The communication unit 12 may use a wireless communication channel with the access point device 34. Furthermore, the communication unit 12 may be configured to receive signals from and transmit signals to the processing unit 14, which controls the communication unit 12. The communication unit 12 comprises an active mode in which the communication unit 12 may establish a connection to the access point device 34 and communicate with the access point device 34. Furthermore, the communication unit 12 comprises at least a low power mode. In the low power mode, the communication unit 12 uses less power than in the active mode. Furthermore, the communication unit 12 will not carry out any communication, registration or connection attempts in the low power mode.

The processing unit 14 is configured to order the communication unit 12 to send a message by providing a send message signal. If the connection between the communication unit 12 and the access point device 34 is lost or a registration failure occurs, the communication unit 12 is unable to send the message. The communication unit 12 is then configured to re-establish the registration or connection to the access point device 34. The communication unit 12 may attempt to solve this problem with the access point device 34 by repetitively transmitting registering signals to the access point device 34. The access point device 34 opens a communication channel as soon as it registers the communication unit 12. If the registration fails and/or if the communication unit 12 cannot establish a connection to the access point device 34, the communication unit 12 is configured to provide a lost registration signal.

The processing unit 14 is configured to receive the lost registration signal. This informs the processing unit 14 that the communication unit 12 did not send the message. The processing unit 14 is further configured to provide a release signal, an attach signal, and a low power mode signal. The release signal orders the communication unit 12 to detach from the access point device 34, i.e. to cease any further connection attempts. The attach signal orders the communication unit 12 to enter the active mode and to perform registration and/or connection attempts by requesting a registration from the access point device 34. The low power mode signal orders the communication unit 12 to change into the low power mode.

When the processing unit 14 receives a lost registration signal, the processing unit 14 is configured to provide a release signal and a low power mode signal. Furthermore, after the reception of the lost registration signal, the processing unit 14 is configured to wait a predetermined waiting period before providing an attach signal.

The predetermined waiting period may be chosen such that an access point device 34 will categorize the registration request from the communication unit 12 as a registration request from a new device. In that case, the access point device 34 will provide the communication unit 12 a high priority for being registered. The processing unit 14 may adapt the predetermined waiting period based on the power consumption of the device 10 and/or the duration of the detachment of the communication unit 12 from the access point device 34. For example, if the power consumption of the device 10 increases, the processing unit 14 may be configured to increase the predefined waiting period. The predetermined waiting period may e.g. be 60 min., preferably 12 h, further preferably 24 h.

The communication unit 12 is configured to repetitively carry out registration and/or connection attempts to register at an access point device 34 of the communication network 36 upon reception of the attach signal. After a timeout period, the processing unit 14 is configured to check whether the communication unit 12 successfully established a connection and registration to the access point device 34. Furthermore, the processing unit 14 may be configured to check whether the communication unit 12 has sent the message within the timeout period.

If the communication unit 12 did not successfully establish a connection or registration to the access point device 34 within the timeout period, the processing unit 14 is configured to provide a further release signal and a further low power mode signal. The processing unit 14 is further configured to send a further attach signal after the predetermined waiting period.

Depending on how many consecutive connection attempts of the communication unit 12 have been unsuccessful, the processing unit 14 may increase the predefined waiting period. Thus if the communication unit 12 has carried out three unsuccessful connection or registration attempts the processing unit 14 may, for example, increase the predetermined waiting period by 1 h.

According to figure 3, the communication unit 14 may comprise a subscriber identity module (SIM) formed as a card, which is used for mobile phones. The SIM card may provide a communication channel for the communication network.

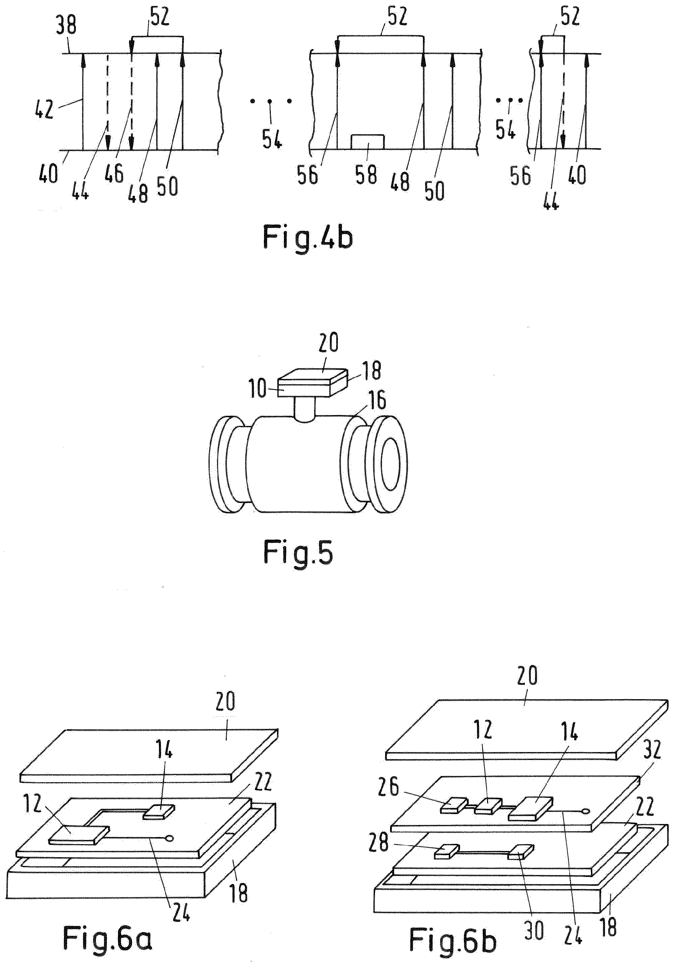

Figures 4a and 4b show diagrams of the signal exchange between the communication unit 12 and the processing unit 14. The diagrams comprise a communication unit level 38, which represents the communication unit 12, and a processing unit level 40, which represents the processing unit 14. Arrows represent the signals. The tip of an arrow indicates the direction of the signal, i.e. which level receives the signal. The tail of the arrow indicates the source of the signal, i.e. which level sends the signal.

According to figure 4a, the processing unit 14 being represented by the processing unit level 40 sends a send message signal 42 to the communication unit 12 being represented by the communication level 38. The communication unit 12 acknowledges the receipt of the send message signal 42 by providing an Ok-signal 44. The processing unit 14 may receive the Ok-signal 44. The communication unit 12 now tries to send the message to the access point device 34.

The message may, for example, be a sensor data signal or a control signal.

In case that the communication unit 12 lost the registration or connection at the access point device 34, the communication unit 12 will not have a working connection to the access point device 34. Thus, the access point device 34 will not accept the message. Hence, the communication unit 12 finds that the message could not be sent. This causes the communication unit 12 to send a lost registration signal 46 to the processing unit 14. The lost registration signal 46 may provide information about a CEREG-EPS registration status.

The communication device 12 now starts an attachment attempt loop 52 to request a registration at the access point device 34, repeatedly.

When the processing unit 14 receives the lost registration signal 46, the processing unit 14 sends a release signal 48 to the communication unit 12. The communication unit 12 may then detach from the access point device 34. Hence, the processing unit 14 forces the communication unit 12 to detach from the access point device 34.

Furthermore, the processing unit 14 provides a low power mode signal 50, which orders the communication unit 12 to enter the low power mode. This also terminates the attachment attempt loop 52.

The processing unit 14 waits the detachment of the communication unit 14 and further waits the predetermined waiting period 54. The predetermined waiting period 54 is based on the period, which is required for detaching the communication unit 14 and on the power consumption of the device 10. The processing unit 14 may monitor the power consumption of the device 10.

If the power consumption of the device 10 is high, the processing unit 14 may increase the predetermined waiting period 54. If the power consumption of the device 10 is low, the processing unit 14 may decrease the predetermined waiting period 54.

In addition, the processing unit 14 may adapt the predetermined waiting period 54 based on the detachment period of the communication unit 12. A short detachment period may cause the processing unit 14 to increase the predetermined waiting period 54. A long detachment period may cause the processing unit 14 to decrease the predetermined waiting period 54.

After the predetermined waiting period 54, the processing unit 14 provides an attach signal 56. Upon reception of the attach signal 56, the communication unit 12 enters the active mode and starts to request a registration at the access point device 34, i.e. the communication unit 12 tries to connect and register to the communication network 36. The communication unit 12 carries out the connection and registration attempts during the attachment attempt loop 52.

In case of figure 4a, the connection attempt of the communication unit 12 after receiving the attach signal 56 is successful, i.e. the access point device 34 has registered the communication unit 12 for communication. Therefore, the communication unit 12 sends an Ok-signal 44 to the processing unit 14 and terminates the attachment attempt loop 52. The processing unit 14 provides the send message signal 42 again, such that the communication unit 12 may send the message via the access point device 34 to the communication network 36. Furthermore, the communication unit 12 may receive messages from the communication network 36 via the access point device 34, i.e. from further applications and/or further devices, which comprise a connection to the communication network 36. The communication unit 12 may send and receive messages until the access point device 34 cancels the registration of the communication unit 12, e.g. after the communication unit 12 did not communicate with the access point device 34 for a long period.

In the case of figure 4b, the connection attempt of the communication unit 12 after receiving the attach signal 56 is unsuccessful. For example, this might be caused by a high amount of communication from further registered devices with the access point device 34, by a shutdown of the access point device 34, or by interferences of a wireless connection between the communication unit 12 and the access point device 34.

After sending the attach signal 56 which starts the attachment attempt loop 52 at the communication unit 12, the processing unit 14 waits a timeout period 58. After the timeout period 58, the processing unit 14 checks whether the connection attempt of the communication unit 12 is successful. When the check result indicates that the communication unit 12 has not been able to get a registration at the access point device 34, the processing unit 14 sends a release signal 48 to terminate the attachment attempt loop 52 and to stop any communication between the communication unit 12 and the access point device 34. Furthermore, the processing unit 14 provides a low power mode signal 50. Upon reception of the low power mode signal 50, the communication unit 12 enters the low power mode. The processing unit 14 waits the predetermined waiting period 54 before sending an attach signal 56 again.

The processing unit 14 may increase the predetermined waiting period 54 based on the number of consecutive check results indicating unsuccessful connection attempts. For example, a high number of unsuccessful connection attempts may cause the processing unit 14 to increase the predetermined waiting period 54.

Figure 5 shows an example of an embodiment of the utility device 16 comprising the device 10. The utility device 16 may be an ultrasonic flow meter for measuring a flow of a fluid in a tube. However, the utility device 16 may also be another kind of device like a stepper motor, a switch etc.

The ultrasonic flow meter may collect sensor data about the flow. By using the device 10, the utility device 16 may regularly provide the sensor data to a communication network. This avoids a manual data exchange. Furthermore, the utility device 16 may receive control signals from the communication network by using the device 10.

The utility device 16 may comprise a housing having an upper housing element 20 and a lower housing element 18. The housing may comprise a printed circuit board (PCB) with the device 10.

Figures 6a and 6b show alternative embodiments of how the utility device 16 comprises the device 10.

According to figure 6a, the housing comprises a PCB being a main board 22. The main board 22 comprises the processing unit 14, which may be a micro processing unit for controlling the utility device 16. Furthermore, the main board 22 comprises the communication unit 12 and an antenna 24 for wireless communication. The communication unit 12 comprises an electrical connection to the antenna and to the micro processing unit. The communication unit 12 and the processing unit 14 form the device 10. The lower housing element 18 may be connected to the upper housing element 20 to form a casing for the main board 22. The upper housing element 20 may comprise a display for displaying the sensor data and/or e.g. status information about the utility device 16. The main board 22 may comprise further components, e.g. for controlling the utility device 16, for retrieving the sensor data and for providing communication channels between the components of the utility device 16.

Figure 6b shows an alternative exemplary embodiment of how the utility device 16 comprises the device 10. In this exemplary embodiment, the utility device 16 comprises a main board 22 and a module board 32.

The main board 22 comprises a main processing unit 30 and a main board communication interface 28. The main processing unit 30 may be a micro processing unit for controlling the utility device 16. The main processing unit 30 comprises an electrical connection to the main board communication interface 28. Furthermore, the main processing unit 30 is configured to transmit and receive signals via the main board communication interface 28.

The module board 32 comprises the communication unit 12, the processing unit 14, the antenna 24, and a module board communication interface 26. The processing unit 14, which may be a micro processing unit, and the communication unit 12 form the device 10. The communication unit 12 comprises an electrical connection to the antenna 24 and the processing unit 14. The processing unit 14 comprises an electrical connection to the module board communication interface 26. Furthermore, the processing unit 14 is configured to transmit and receive signals via the module board communication interface 26.

The housing with the lower housing element 18 and the upper housing element 20 comprises the module board 32 and the main board 22. The main board communication interface 28 and the module board communication interface 26 are electrically connected to each other. They can forward signals via the electrical connection. This means the main processing unit 30 and the processing unit 14 can communicate via the module board communication interface 26 and the main board communication interface 28. For example, the main processing unit 30 may provide sensor data from the flow meter to the processing unit 14. The processing unit 14 may then order the communication unit 12 to send the sensor data as message to the communication network 36.

The module board 32 may be detachable from the main board 22. This allows a replacement of the module board 32 by another module board, e.g. for providing another communication unit which uses a channel being different from NB-loT.

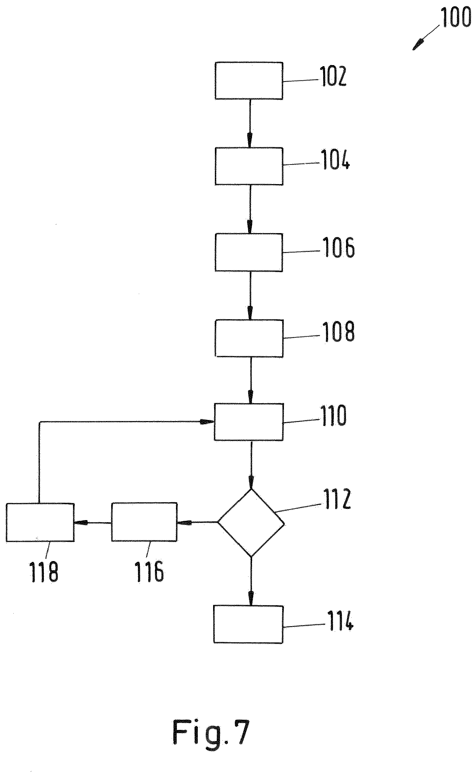

Figure 7 shows a flow chart of a method 100 for establishing a connection between a device according to the above description and an access point device of a communication network. The device comprises a processing unit and a communication unit, wherein the processing unit controls the communication unit. The communication unit may communicate with the access point device of the communication network.

In a first step 102 of the method 100, the communication unit provides a lost registration signal if the communication unit cannot establish a connection to the access point device. The lost registration signal indicates that the communication unit is not registered at the access point device, i.e. that the communication unit cannot communicate with the access point device and the communication network.

The communication unit may start a loop in which the communication unit tries to establish a connection with the access point device by requesting a registration at the access point device. The loop may be an attachment attempt loop.

In a further step 104, the processing unit receives the lost registration signal. After the reception of the lost registration signal, the processing unit provides a release signal to the communication unit, in a step 106. The release signal forces the communication unit to stop communication or to detach from the access point device. Thus, upon reception of the release signal, the communication unit stops any attempts to communicate with the access point device.

Furthermore, in a step 108, the processing unit provides a low power mode signal. The communication unit receives the low power mode signal. The low power mode signal orders the communication unit to change from the active mode to the low power mode to save power.

In a step 110, the processing unit waits a predetermined waiting period. After the predetermined waiting period, the processing unit provides an attach signal to the communication unit. The attach signal transfers the communication unit to the active mode. Furthermore, the attach signal orders the communication unit to establish a connection to the access point device. This starts an attachment attempt loop in which the communication unit repetitively tries to acquire a registration at the access point device.

In a step 112, after providing the attach signal, the processing unit checks whether the communication unit successfully established a connection to the access point device after a timeout period.

If the check result indicates that the communication unit established a connection to the access point device, the processing unit may provide a send message signal according to step 114. The send message signal orders the communication unit to send a message being provided by the processing unit.

If the check result indicates, that the communication unit did not establish a connection to the access point device within the timeout period, the processing unit provides a release signal according to step 116. Furthermore, the processing unit provides a low power mode signal to the communication unit according to step 118.

Then, the method 100 continues at step 110 such that the processing unit waits a predetermined waiting period before providing a further attach signal to the communication unit.

The processing unit may determine how many consecutive times the check result indicates that the communication unit did not establish a connection to the access point device. Based on that number of times, the processing unit may increase the predetermined waiting period. Furthermore, the processing unit may retrieve the power consumption and/or the battery status of the device. The processing unit may then adapt the predetermined waiting period based on the power consumption and/or the battery status of the device.

A computer program product may implement the method 100. The computer program product comprises instructions which when executed on a processing unit of a computer instruct the computer to perform the method steps mentioned above. A computer readable medium, e.g. a CD, a flash memory, a floppy disk or any other kind of memory device, may have stored the computer program product.

The invention is not limited to one of the aforementioned embodiments. It can be modified in many ways.

All features and advantages resulting from the claims, the description and the drawing, including constructive details, spatial arrangements and procedural steps, may be essential for the invention both in themselves and in various combinations.

### List of reference signs

- 10: device
- 11: power source
- 12: communication unit
- 14: processing unit
- 16: utility device
- 18: lower housing element
- 20: upper housing element
- 22: main board
- 24: antenna
- 26: module board communication interface
- 28: main board communication interface
- 30: main processing unit
- 32: module board
- 34: access point device
- 36: communication network
- 38: communication unit level
- 40: processing unit level
- 42: send message signal
- 44: Ok-signal
- 46: lost registration signal
- 48: release signal
- 50: low power mode signal
- 52: attachment attempt loop
- 54: waiting period
- 56: attach signal
- 58: timeout period

## Claims

1. Battery powered device for communicating with an access point device (34) of a communication network (36), the device (10) comprising:
- a communication unit (12) for communicating with the access point device (34); and
- a processing unit (14) for controlling the communication unit (12);
wherein the communication unit (12) comprises at least an active mode and at least a low power mode;
wherein the communication unit (12) is further configured to provide a lost registration signal (46) indicating that the communication unit (12) is not registered at the access point device (34);
wherein the processing unit (14) is configured to receive the lost registration signal (46); wherein, upon reception of the lost registration signal (46), the processing unit (14) is further configured to provide a release signal (48) to the communication unit (12), wherein the release signal (48) forces the communication unit (12) to stop the communication with the access point device (34) or to detach from the access point device (34); wherein, upon reception of the lost registration signal (46), the processing unit (14) is further configured to provide a low power mode signal (50), wherein the low power signal transfers the communication unit (12) into the low power mode,
wherein the processing unit (14) is further configured to provide an attach signal to the communication unit (12) after a predefined waiting period (54), wherein the attach signal transfers the communication unit (12) to the active mode and which orders the communication unit (12) to start communication with the access point device (34).

2. Battery powered device according to claim 1, wherein, after a predefined timeout period , the processing unit (14) is further configured to check whether the communication unit (12) receives a registration and/or established a connection to the access point device (34) after receiving the attach signal, and, if a check result indicates that the communication unit (12) is not registered or connected to the access point device (34), to provide the release signal (48) and the low power mode signal (50) to the communication unit (12).

3. Battery powered device according to claim 2, wherein the processing unit (14) is further configured to increase the predefined waiting period (54) based on a number of how many consecutive check results indicate that the communication unit (12) is not registered at or connected to the access point device (34).

4. Battery powered device according to one of claims 1 to 3, wherein the predefined waiting period (54) is based on a power consumption of the device (10).

5. Battery powered device according to one of claims 1 to 4, wherein the predefined waiting period (54) is based on a detachment period of the communication unit (12) from the access point device (34).

6. Battery powered device according to one of claims 1 to 5, wherein the predefined waiting period (54) increases if the power consumption of the device (10) increases.

7. Battery powered device according to one of claims 1 to 6, wherein the communication unit (12) comprises or is combined with a subscriber identity module.

8. Battery powered device according one of claims 1 to 7, wherein the processing unit (14) is a micro processing unit.

9. Utility device for connecting to the access point device (34) of the communication network (36), the utility device (16) comprising:
- a battery powered device (10) according to one of claims 1 to 8; and
- an antenna (24) for communicating with an access point of a network (36);
wherein the communication unit (12) is connected to the antenna (24); and
wherein the communication unit (12) is configured to provide and receive communication signals via the antenna (24).

10. Utility device according to claim 9, the utility device further comprising
- a main board (22) comprising a main board communication interface (28) and a main processing unit (14); and
- a module board (32) comprising a module board communication interface (26) being connected to the main board communication interface (28);
wherein the device (10) and the antenna (24) are arranged on the module board (32);
wherein the processing unit (14) is connected to the module board communication interface (26);
wherein the processing unit (14) is configured to provide and receive control signals via the module board communication interface (26);
wherein the main processing unit (30) is connected to the main board communication interface (28), and
wherein the main processing unit (30) is configured to provide and receive control signals via the main board communication interface (28).

11. Utility device according to claim 9, the utility device further comprising a main board, wherein the device (10) with the communication unit (12) and the main processing unit (14) and the antenna (24) are arranged on the main board.

12. Module board for connecting to a main board of a utility device, the module board comprising:
- a battery powered device (10) according to one of claims 1 to 8;
- a module board communication interface (26) for communicating with the main board (22) of the utility device (16); and
- an antenna (24) for communicating with an access point of a network (36);
wherein the processing unit (14) is connected to the module board communication interface (26);
wherein the processing unit (14) is configured to provide and receive control signals via the module board communication interface (26);
wherein the communication unit (12) is connected to the antenna (24); and
wherein the communication unit (12) is configured to provide and receive communication signals via the antenna (24).

13. Method for establishing a connection between a battery powered device according to one of the preceding claims and an access point device of a communication network, the method (100) comprising the following steps:
- providing (102) a lost registration signal using the communication unit, the lost registration signal indicating that the communication unit is not registered at the access point device;
- receiving (104) the lost registration signal using the processing unit;
- providing (106), upon reception of the lost registration signal, a release signal to the communication unit using the processing unit, wherein the release signal forces the communication unit to stop communication with the access point or to detach from the access point device;
- providing (108), upon reception of the lost registration signal, a low power mode signal using the processing unit, wherein the low power mode signal transfers the communication unit into the low power mode;
- providing (110) an attach signal to the communication unit after a predefined waiting period (54) using the processing unit, wherein the attach signal transfers the communication unit to the active mode and which orders the communication unit to get a registration or to establish a connection to the access point device.

14. Computer program product comprising instructions which when executed on a processing unit of a computer instruct the computer to perform the method steps of the method (100) according to claim 12 or 13.

15. Computer readable medium having stored the computer program product of claim 14.
